(19) Europäisches Patentamt European Patent Office Office européen des brevets

(11) **EP 4 498 863 B1**

(12) **EUROPEAN PATENT SPECIFICATION**

(45) Date of publication and mention of the grant of the patent:
**24.12.2025 Bulletin 2025/52**

(21) Application number: **23716434.8**

(22) Date of filing: **28.03.2023**

(51) International Patent Classification (IPC):
*A46B 15/00* (2006.01)    *A46B 13/02* (2006.01)

(52) Cooperative Patent Classification (CPC):
**A46B 15/0012; A46B 13/023; A46B 15/0006;**
A46B 2200/1066

(86) International application number:
**PCT/EP2023/058062**

(87) International publication number:
**WO 2023/186940 (05.10.2023 Gazette 2023/40)**

(54) **PERSONAL CARE DEVICE**

KÖRPERPFLEGEVORRICHTUNG

DISPOSITIF DE SOINS PERSONNELS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.03.2022 EP 22165801**

(43) Date of publication of application:
**05.02.2025 Bulletin 2025/06**

(73) Proprietor: **Koninklijke Philips N.V.**
**5656 AG Eindhoven (NL)**

(72) Inventors:
• **CRONIN, Harry Michael**
**5656 AG Eindhoven (NL)**
• **DUFFY, David Michael**
**5656 AG Eindhoven (NL)**
• **MCDONALD, Rory Andrew Bruce**
**5656 AG Eindhoven (NL)**

(74) Representative: **Philips Intellectual Property & Standards**
**High Tech Campus 52**
**5656 AG Eindhoven (NL)**

(56) References cited:
US-A1- 2011 010 875    US-A1- 2017 332 850
US-A1- 2021 186 196    US-A1- 2021 393 026

**Description**

FIELD OF THE INVENTION

The present invention relates to the field of personal care devices, and in particular to the field of personal care devices that have cleaning elements which are configured to vibrate in use.

BACKGROUND OF THE INVENTION

Personal care devices, such as electric brushing or shaving devices, are used on a regular (e.g. daily) basis.

It is common for such personal care devices to have cleaning elements (e.g. bristles, tufts, elongated projections and the like) which are configured to vibrate in use. The stiffness of the cleaning elements may be affected by whether or not they are vibrating. That is, stiffness of the cleaning elements may vary depend on an operating status of the personal care device. However, excessive pressure applied to a user's tissue surface during use may be linked tissue damage.

Personal care devices are known that have an ability to warn a user when too much pressure is being applied to a tissue surface during use. However, such devices do not include a functionality to directly counteract the application of excessive applied pressure.

Also, based on studies, achieving correct stiffness of the cleaning elements and/or their placement in vibratory personal care device brushes is expected to affect long term results. For example, there are recognized problems with mouthpiece-style dental brushes (such as "U-shaped" or "Y-shaped" brushes), arising partly from poor alignment between the cleaning elements (e.g. bristles) and the user's teeth.

US 2021 /186196 A1 discloses an electric toothbrush comprising a motion sensor for sensing motion of the toothbrushing device to produce motion data, and a signal analysis unit for analyzing the motion data to produce a feedback signal. The controller is arranged to adjust the vibration produced by the vibration means in dependence on the feedback signal.

US 2021/393026 A1 discloses an oral care system includes: an oral care device including a head having a reference face; and a plurality of sensors configured to generate sensor data, the sensor data including: motion data and orientation data corresponding, respectively, to motion measurements and orientation measurements of the reference face during a freeform oral care routine; and image data generated from external images of the oral cavity during the freeform oral care routine; and at least one programmable processor communicably coupled to the plurality of sensors, the at least one programmable processor configured to: generate transformed sensor data from the sensor data, the transformed sensor data comprising the orientation data transformed to be expressed in terms of an angular orientation system, the motion data, and enhanced image data, the enhanced image data representing each external image of the oral cavity combined with a representation of corresponding transformed orientation data.

US 2017/332850 A1 discloses a brush comprising a first motor to control a rotation of a brush head, a second motor to control a vibration of the brush head. In one embodiment, the brush further comprises a controller to control a ratio between the rotation and the vibration.

US 2011/010875 A1 discloses an electric toothbrush comprising a three-axis acceleration sensor which is mounted to a body of an electric toothbrush, a CPU which detects the three-dimensional attitude of the body based on an output from the acceleration sensor and, based on the attitude of the toothbrush, estimates which portion is being brushed. Then, the CPU performs control for switching between operation modes (such as the rotational direction of a motor and the frequency of vibration of the brush) according to the estimated portion being brushed.

SUMMARY OF THE INVENTION

The invention is defined by the claims.

According to examples in accordance with an aspect of the invention, there is provided a personal care device comprising:

a plurality of cleaning elements for engagement with a surface of a user;
vibratory means adapted to vibrate the cleaning elements at a range of different frequencies;
a pressure sensor configured to sense a loading force applied to at least a first subset of the cleaning elements by engagement with the surface of the user; and
a control unit configured to determine a target vibration frequency based on the sensed loading force applied to the at least first subset of the cleaning elements and cleaning element data describing one or more physical properties of the cleaning elements, wherein the target vibration frequency is configured to cause at least one of a mechanical response of the cleaning elements or a movement direction of the cleaning elements, and to control the vibratory means based on the target vibration frequency.

Proposed concepts thus aim to provide schemes, solutions, concepts, designs, methods and systems pertaining to aiding and/or improving a vibratory personal care device having cleaning elements that are adapted, in use, to vibrate.

In particular, it is proposed that, based on a loading force applied to the cleaning elements during use, the vibration of the cleaning elements may be controlled. That is, the vibration of the personal care device may be adapted based on a pressure applied to cleaning elements (by engagement with a tissue surface of the user). In particular, a vibration frequency of the vibratory means (used to vibrate the cleaning elements) may be set based on a direction and/or magnitude of a loading force applied to the cleaning elements. In this way, a vibratory personal care device may actuate its bristles to produce controlled force variations and/or distributions by taking into account pressure applied by the user. Such variations and/or distributions may be non-homogenous across the cleaning elements of the device.

Embodiments may be based on a realization that the concept of vibrationally exciting bristles or bristle-like structures to produce motion across a surface (as used in small robots known as 'bristle bots') can be leveraged to provide improved cleaning in the field of vibratory personal care devices. **In** particular, small robots are known that can achieve full 360° steering by having bristles of different size and natural frequency spaced around the body of the robot and exciting them with a suitable mixture of vibration frequencies. This effect fundamentally relies on the asymmetry in the mechanical properties of the bristles, which in turn leads to asymmetry in the response of the different bristles to different driving frequencies. By matching the drive/vibration frequency to the known asymmetry, the bristle-based robot can be steered through any angle, for example. Other examples of mechanical structures which are controlled vibrationally have also been demonstrated, including 3D-printed hairs which can produce motion in a controlled direction or change their stiffness dramatically given suitable input vibrations. It is proposed to leverage such concepts for controlling vibration of a personal care device so as to achieve desired characteristics and/or movement of the cleaning elements, in use.

By way of example of the proposed concept(s), a vibratory toothbrush or mouthpiece may be configured to measure a magnitude of a force applied to its cleaning elements (e.g. bristles) and/or its direction. This could arise from a user pressing the device against their teeth and may, for example be measured via a pressure sensor. Using the sensed magnitude and/or direction, along with known properties of the cleaning elements, a target vibration frequency (or mix of frequencies) may be calculated which is expected to lead to a desired mechanical response of the cleaning elements within a certain area of the device and/or a preferential movement direction for the cleaning elements as a whole. Further, such desired stiffness or motion direction may be calculated based on the device's position in the user's mouth and/or the user's known dental anatomy. A drive frequency of the vibratory means may then be adjusted accordingly.

In other words, embodiments propose to adapt vibration of a vibratory personal care device based on based on a pressure applied to cleaning elements of the device. Such adaptation may be configured to cause a particular mechanical response of the cleaning elements and/or a preferential movement direction of the cleaning elements. Embodiments may therefore facilitate improved cleaning during use and/or reduce unwanted tissue damage.

Embodiments may be particularly relevant to dentistry propositions, for example, by enabling improved cleaning of a user's tooth, gum, tongue, etc. For instance, proposed embodiments may aid improved dental care. Accordingly, embodiments may be used in relation to dental treatment so as to support a dental care professional when providing treatment for a subject.

By being integrated into the normal brushing regimen of a user, embodiments may support improved dental care. Improved vibratory-based dental cleaning may therefore be provided by proposed concepts.

It has been realized that by controlling vibration frequency of the cleaning element based on pressure applied to cleaning elements, mechanical properties and/or movement direction of the cleaning elements may be controlled, so as to provide improved cleaning and/or reduced tissue damage for example.

Embodiments may therefore provide the advantage that tissue cleaning may be improved through the use of loading force based control of a vibratory personal care device. For example

Some embodiments may further comprise a position sensor for sensing a positioning of at least a subset of the plurality of cleaning elements. The control unit may then be configured to determine the target vibration frequency further based on the sensed position of the at least first subset of the cleaning elements. For instance, the control unit may be configured to determine a target direction based on the sensed position of the at least first subset of the cleaning elements and to determine the target vibration frequency based on the determined target direction. Thus, position sensing concepts may be employed to determine the target vibration frequency, so as to achieve a desired motion direction for example. Simple movement and/or position sensing techniques and/or apparatus may therefore be employed to accurately identify the target vibration frequency of the personal care device.

In some exemplary embodiments, the control unit may be further configured, in use, to identify a surface of the user engaged by the plurality of cleaning elements based on the sensed position of the at least first subset of the cleaning elements, and to determine the target vibration frequency further based on the identified surface of the user.

By applying spatially-resolved forces, embodiments may be configured to compensate for small deviations in user technique (e.g. soften the cleaning elements in areas placed over sensitive tissue (e.g. the gums) but not over resilient areas (e.g. the teeth). Embodiments may also compensate for poor alignment between generically-arranged cleaning elements and a user's unique anatomy. By way of further example, embodiments may aid a user in cleaning complex areas (e.g. around braces) by producing a 'wafting' motion away from the braces, e.g. by simulating a subset of the cleaning elements provided by the device.

Other advanced functions, such as localized deposition of cleaning paste or localized sampling of bacteria from the user's tissue, may be facilitated by such embodiments.

The control unit may comprise a communication interface configured to obtain the cleaning element data of the cleaning elements In this way, control of the vibration frequency may be accurately determined according to specific characteristics of the cleaning elements. That is, the control of a vibratory personal care device may be tailored to its specific characteristics, thus providing improved or optimized cleaning operation.

By way of example, the communication interface may be configured to obtain cleaning element data from a database of cleaning element data. Such a database may be implemented, at least in part, in a remotely accessible data storage unit.

The one or more physical properties of the cleaning elements may comprise at least one of: shape; type; size; cross-sectional area; arrangement; material; stiffness; length; number of bristles per unit area; and mounting angle. A range of mechanical characteristics of the cleaning elements may therefore be accounted for when determining the target vibration frequency. Accurate and optimized control of the cleaning element vibration may therefore be enabled by proposed embodiments.

In some embodiments, the control unit may be further configured to determine a second target vibration frequency based on the sensed loading force applied to the at least first subset of the cleaning elements and to control the vibratory means based on the second target vibration frequency. Embodiments may therefore be adapted to vibrate the cleaning elements at a mixture of different frequencies, with the aim of achieving a desired mechanical response of the cleaning elements and/or a preferential movement direction for the cleaning elements.

In an exemplary embodiment, the pressure sensor may be further configured to sense a loading force applied to a second, different subset of the cleaning elements by engagement with the surface of the user. The control unit may then be further configured to determine a third target vibration frequency based on the sensed loading force applied to the second subset of the cleaning elements and to control the vibratory means based on the third target vibration frequency. In this way, different groups or subsets of the cleaning elements may be vibrated at respective frequencies, so as to achieve a desired mechanical response and/or one or more preferential movement directions.

The sensed loading force may, for example, comprise at least one of a magnitude value and direction value. The control unit may then be configured to determine the target vibration frequency based on the at least one of a magnitude value and direction value.

The at least first subset of the plurality of cleaning elements may comprise vibration enhanced structures configured to have a predetermined mechanical property in response to being vibrated at a predetermined excitation frequency. For example, the vibration enhanced structures may comprise at least one of: an elongated bristle having a cross-sectional shape and/or size that is different at at least two different positions along the longitudinal length of the bristle; an elongated structure mounted to the personal care device with an angular bias;
an elongated bristle formed of differing materials at at least two different positions along the longitudinal length of the bristle.

The personal care device may comprise a toothbrush, and may preferably comprise an oral care device (such as an electric toothbrush) that is adapted to vibrate in use. In other embodiments, the personal care device may comprise a mouthpiece, shaver, or skin cleansing device that is adapted to vibrate in use. One or more proposed concept(s) may therefore be employed in a range of different personal care devices. Embodiments may therefore have wide application in the field of personal care devices.

According to another aspect of the invention, there is provided a method of controlling a personal care device, wherein the personal care device comprises: a plurality of cleaning elements for engagement with a surface of a user; vibratory means adapted to vibrate the cleaning elements at a range of different frequencies; and a pressure sensor, and wherein the method comprises:

> sensing, with the pressure sensor, a loading force applied to at least a first subset of the cleaning elements by engagement with the surface of the user;
> determining a target vibration frequency based on the sensed loading force applied to the at least first subset of the cleaning elements and cleaning element data describing one or more physical properties of the cleaning elements, wherein the target vibration frequency is configured to cause at least one of a mechanical response of the cleaning elements or a movement direction of the cleaning elements; and
> controlling the vibratory means based on the target vibration frequency.

According to yet another aspect of the invention, there is provided a computer program comprising computer program code means which is adapted, when said computer program is run on a computer, to implement a method according to proposed embodiment.

Thus, there may also be provided a computer system comprising: a computer program product according to proposed embodiment; and one or more processors adapted to perform a method according to a proposed concept by execution of the computer-readable program code of said computer program product.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 is a simplified schematic block diagram of an electric toothbrush according to a proposed embodiment;
Figure 2 depicts a modification to the embodiment of Figure 1;
Figure 3 is a simplified block diagram of smart toothbrush device according to another embodiment;
Figure 4 is a simplified flow diagram of a method for controlling a personal care device according to an embodiment; and

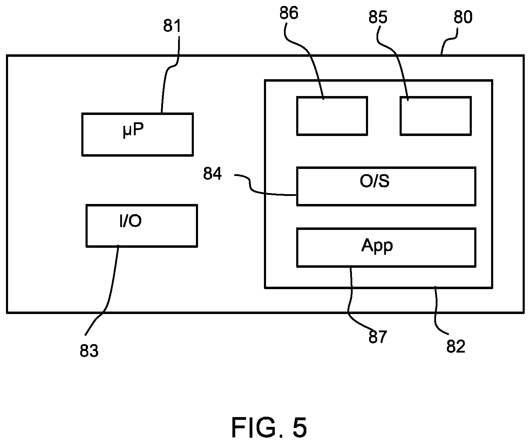

Figure 5 is a simplified block diagram of a computer within which one or more parts of an embodiment may be employed.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

The invention proposes concepts for aiding and/or improving cleaning from a vibratory personal care device. In particular, embodiments may provide a system, device and/or method which provides a process for vibrational control of the mechanical properties and/or motion of toothbrush bristles. This may enable a vibratory personal care device to optimize mechanical properties and/or motion of its cleaning elements according to its use status, which may, for example enhance cleaning functions or outcomes.

The proposed concepts may, for example, be applied to electric toothbrushes and mouthpiece-style toothbrushes (which may have particular problems of bristle alignment). Embodiments may also employ dedicated vibration-enhanced structures (which may enable special use cases such as simultaneous interdental brushing and conventional brushing, or vibration-enhanced tongue cleaning).

Embodiments may therefore facilitate extended and/or improved cleaning functionality for vibratory personal care devices. Such embodiments may be particularly relevant to teledentistry propositions, for example, by enabling the control and/or adaptation of mechanical properties of cleaning elements according to usage. For instance, based on a force applied to the cleaning elements during use, a vibration frequency of the device may be controlled so as to obtain desired mechanical properties and/or motion of its cleaning elements.

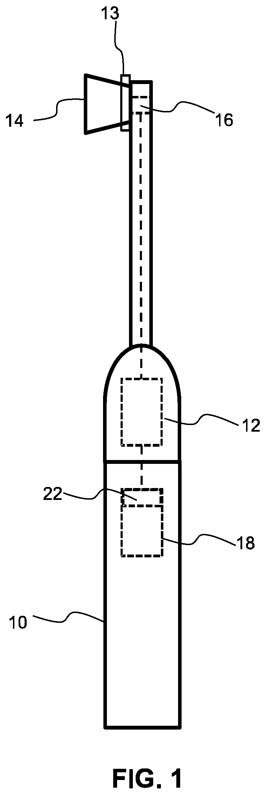

Referring to Figure 1, there is shown a simplified schematic block diagram of an electric toothbrush 10 according to a proposed embodiment. The electric toothbrush 10 comprises a brush head 13 supporting a plurality of bristles 14 (i.e. cleaning elements 14) for engagement with an oral surface of a user. The toothbrush also comprises vibratory means 12 (specifically, a motor) that is adapted, in use, to vibrate the brush head 13 (and thus the bristles 14) of the electric toothbrush 10 across a range of different frequencies (e.g. 25Hz-1kHz).

The toothbrush 10 further comprises a pressure sensor 16 that is configured to sense a loading force applied to the bristles 14 by engagement with the oral surface of the user. Here, the pressure sensor 16 is adapted to sense/detect a magnitude value of the loading force and to also sense/detect a direction value of the loading force.

The toothbrush 10 also comprises a control unit 18 that is configured to determine a target vibration frequency based on the sensed loading force applied to the bristles 14 and cleaning element data describing one or more physical properties of the cleaning elements/bristles 14 and to control the vibratory means 12 based on the target vibration frequency. Specifically, the control unit 18 is configured to determine the target vibration frequency based on the magnitude and/or direction of the sensed loading force, so as to achieve a desired mechanical response of the bristles 14 and/or a preferential movement direction for the bristles 14. In other words, the target vibration frequency is configured to cause at least one of a mechanical response of the cleaning elements/bristles 14 or a movement direction of the cleaning elements/bristles 14.

More specifically, in the embodiment of Figure 1, the control unit 18 comprises a communication interface 22 that is configured to obtain the cleaning element data describing one or more physical properties of the bristles 14. Specifically, the communication interface 22 provides a wireless connection to a database of cleaning element data describing one or more physical properties of bristles 14 of different toothbrushes, such as shape; type; size; cross-sectional area; arrangement; material; stiffness; length; number of bristles per unit area; and mounting angle.

By way of example, the wireless connection may comprise a short-to-medium-range communication link. For the avoidance of doubt, short-to-medium-range communication link should be taken to mean a short-range or medium-range communication link having a range of up to around 100 meters. In short-range communication links designed for very short communication distances, signals typically travel from a few centimeters to several meters, whereas, in medium-range communication links designed for short to medium communication distances, signals typically travel up to 100 meters. Examples of short-range wireless communication links are ANT+, Bluetooth, Bluetooth low energy, IEEE 802.15.4, ISA100a, Infrared (IrDA), ISM Band, Near Field Communication (NFC), RFID, 6LoWPAN, UWB, Wireless HART, Wireless HD, Wireless USB, ZigBee. Examples of medium-range communication links include Wi-Fi, Z-Wave.

The communication interface 22 is thus configured to obtain cleaning element data from a database implemented in a remotely accessible data storage unit. In this way, information toothbrush 10 can be obtained/retrieved by the control unit 18.

Using the information regarding the physical properties of the specific bristles 14 of the toothbrush 10, together with the sensed magnitude and/or direction of the loading force applied to the bristles 14, the control unit 18 is configured to determine the target vibration frequency for causing the bristles 14 to exhibit, when vibrated at the target vibration frequency, a desired mechanical property (e.g. reduced stiffness) and/or movement direction.

In this way, using the sensed magnitude and/or direction of the loading force, along with known properties of the bristles 14, a target vibration frequency may be calculated (by the control unit 18) which is expected to lead to a desired mechanical response of the bristles 14 and/or a preferential movement direction for the bristles 14. The control unit 18 may then adjust the drive frequency of the vibratory means 12 accordingly.

The vibratory means 12 can thus be controlled so that as to achieve a target mechanical response and/or movement direction for the bristles 14, thereby potentially improving a cleaning action and/or reducing an amount of unwanted tissue damage, for example.

Although the embodiment of Figure 1 has been described above with reference to vibratory motion of the bristles of the toothbrush, the proposed concept(s) may be employed in other vibratory personal care devices exhibiting vibration of cleaning elements.

Also, although the embodiment of Figure 1 employs a concept of employing loading force applied to the bristles, other parameters of the personal care device may also be monitored to refine or improve control of the vibration frequency. Examples of other parameters that may be monitored include: position of the device; movement of the device; magnetic field; and contacted surface(s). Simple detection of operation parameters of the personal care device to determine a preferred, optimal or target vibration frequency may therefore be employed, thus enabling improved or optimized cleaning.

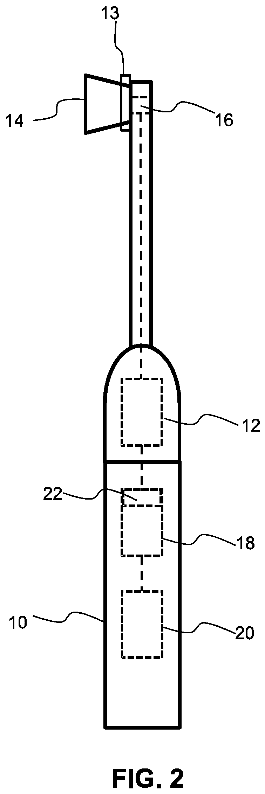

Simply by way of example, a modified version of the embodiment of Figure 1 is depicted in Figure 2. In the embodiment of Figure 2, the toothbrush 100 further comprises a position sensor 20 for sensing a positioning of the bristles 14. Such a sensor 20 may employ a gyroscope, compass or other angular sensing device. The sensor 20 may also comprise an accelerometer sensor positioned in the handle of the toothbrush 10.

The control unit 18 is then configured to determine the target vibration frequency further based on the sensed position of the bristles. For instance, the control unit is configured to determine a target direction for the bristles 14, based on the sensed position of the bristles 14. Based on the target direction, the control unit 18 then determines the target vibration frequency (which will achieve a desired movement direction for the bristles 14).

In another exemplary embodiment, the toothbrush 10 may be configured, in use, to identify a surface of the user engaged by the bristles (e.g. based on a sensed position of the bristles). This identified surface of the user may then be used to determine the target vibration frequency further based on the identified surface, e.g. so as to result in a desired movement direction for the bristles 14 and/or a desired mechanical response (such as increased or reduced stiffness, for example).

Furthermore, although embodiments have been described above with reference to determining a single target vibration frequency, it is proposed that embodiments may be adapted to determine a mixture of target frequencies (i.e. a plurality of different frequencies) for causing a desired mechanical response and/or movement direction of the bristles. This may, for example, be done in consideration of sensed loading forces applied to different subsets of the bristles.

In another exemplary embodiment, an effectiveness of the vibrational bristle actuation may be further enhanced by inclusion of specially designed structures with enhanced mechanical-vibration response (such as 3D printed hairs) in known locations.

By way of further explanation of the proposed concept(s), main steps of an embodiment when applied to a conventional electric-powered toothbrush are summarized as follows:

(I) (For interchangeable head brushes) The toothbrush registers which brush head is attached and retrieves its properties from a (cleaning element) database describing physical properties of bristles of different toothbrush heads. Such physical properties include size, shape and bristle type and arrangement.

(II) The user powers on the toothbrush and begins brushing. The brush head's position in the user's mouth is tracked using the brush's inertial sensors in a conventional manner.

(III) The magnitude of the pressure applied to the bristles by the user is measured through the brush head pressure sensor. Also, the direction of the applied pressure relative to the brush head and bristles is either measured directly or calculated from the magnitude and the position of the brush head in the mouth.

(IV) A pressure difference across the area of the brush head is calculated from the measurements obtained in (III) and known brush head properties. Where there is asymmetry in the pressure applied to different bristles or groups of bristles (which is expected to be the vast majority of situations), the method proceeds to the following step (V). Where no suitable pressure asymmetry is detected, the system may guide or warn the user and/or attempt to modify bristle properties across the whole brush head (by controlling the vibration frequency of the toothbrush).

(V) The toothbrush calculates, given its current in-mouth position, a desired bristle stiffness or motion direction. Alternatively, the desired properties may be constant or entered manually.

(VI) The brush calculates, given the pressure asymmetry from (IV) and the desired bristle properties from (V), a target vibration frequency (or mix of frequencies) expected to achieve the desired bristle properties. The target vibration frequency/frequencies) are then used to control the toothbrush motor. This calculation may be further modified by considering the achievable inputs from the available motor hardware, and where the ideal properties are not achievable, the toothbrush may at least partly achieve them.

(VII) Steps (III) - (VI) are repeated as the user completes their brushing session, given the changing inputs of pressure and position to calculate updated desired bristle properties and hence updated target vibration frequencies.

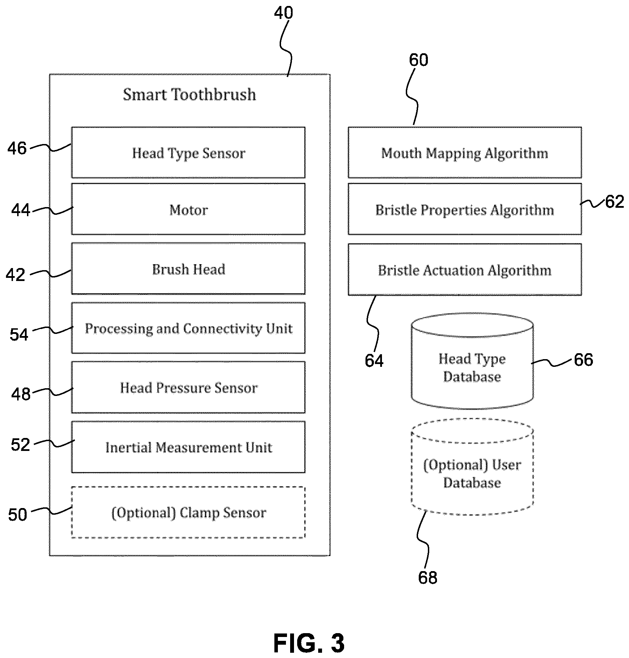

Referring to Figure 3, there is shown a simplified block diagram of smart toothbrush device 40 according to another embodiment. The toothbrush 40 is adapted to be inserted into a user's mouth and vibrate (in use) for oral cleaning purposes.

The toothbrush 40 contains multiple hardware components common to conventional electrically-powered vibratory toothbrushes, specifically including:

- A toothbrush head (or "Brush Head") 42 which may be permanently-fixed or user-changeable, containing at least one group (i.e. tuft) of multiple cleaning elements (e.g. bristles) at or close to the distal end which contact the teeth during brushing. In some embodiments (e.g. mouthpiece-style toothbrushes), the cleaning elements may be arranged throughout the brush head, rather than only at the distal end. The brush head 42 may include one or more structures (i.e. "Vibration Enhanced Structures") either at the distal end or throughout (for mouthpiece-style toothbrushes) which are designed to have a high responsiveness to mechanical vibrations, so as to enhance the vibrational control function. Examples of such vibration enhanced structures include 3D printed hair-like fibers having a cross-sectional area that varies along the length of the fiber to enhance controllability via vibrational inputs of a known frequency. Such vibration enhanced structures may be especially relevant for specialized tasks including interdental brushing and tongue cleaning;
- A motor 44 for driving vibration of brush head 42. The motor 44 may be configured to create sonic, ultrasonic, oscillating-rotating, or other vibrational or mechanical inputs to the brush head 42;
- A head sensor (i.e. "Head Type Sensor") 46 configured to detect the type of brush head attached. Several types of such a head sensor are widely known and are expected to be suitable, including wireless or wired-type sensors;
- At least one pressure sensor (i.e. "Head Pressure Sensor") 48 configured to measure a pressure applied by the user to the brush head during brushing. Suitable hardware may include any type of strain gauge, other force sensor, or mechanical position sensor, disposed within the toothbrush body, such that loading forces applied on the distal end of the brush head are transmitted to it and detected. Alternatively, the brush head may include a direct pressure sensing element at the distal end. In mouthpiece-style toothbrushes, there may be optional additional hardware (the "Clamp Sensor") 50 - a clamp-type sensor which measures forces applied by a mechanical clamping component such as a spring. The pressure sensor(s) may preferably consist of several sub-sensors disposed in different positions around the toothbrush 40 such that directional forces can be detected and resolved;
- Hardware for measuring the position of the toothbrush in space (the "Inertial Measurement Unit") 52. Such hardware may include accelerometers, gyroscopes and/or magnetometers for example;

- A central processing unit with suitable memory hardware and (optionally) suitable networking hardware (the "Processing and Connectivity Unit") 54 to allow the toothbrush to collect, store and analyze data from all connected hardware components, send control signals to the Motor, and communicate wirelessly (e.g. via WiFi, Bluetooth or 5G).

The embodiment of Figure 3 also employs a set of algorithms, which may be run locally within the processing and connectivity unit 54, or may be accessed remotely on another nearby device (e.g. smartphone) or via a cloud service. The set of algorithms includes:

- A first algorithm (the "Mouth Mapping Algorithm") 60 for relating the positional data from the inertial measurement unit 52 to a generic or user-specific mouth model to estimate the relative position of the brush head 42 to relevant structures in the mouth, such as teeth, gums, and the like (referred to below as the "In-Mouth Position");
- A second algorithm (the "Bristle Properties Algorithm") 62 for calculating the ideal/desired cleaning element properties for a given usage state and In-Mouth Position. Bristle properties may include stiffness and/or motion direction, and may be spatially-resolved within the area of the brush head or uniform across that area;
- A third algorithm (the "Bristle Actuation Algorithm") 64 for calculating the required frequency inputs to achieve the desired cleaning element properties.

The embodiment of Figure 3 further employs a database (the "Head Type Database") 66 containing properties relating to the Brush Head(s), including: (a) the physical properties of different general brush head types or models; (b) properties of a specific brush head, such as time in use and/or wear characteristics. The head type database 66 may be stored locally within the processing and connectivity unit 54, or may be accessed remotely on another nearby device (e.g. smartphone) or via a cloud service.

The embodiment of Figure 3 may also comprise a second database (the "User Database") 68 containing properties unique to a specific user, including unique mouth and dental anatomy, dental health goals, presence of implants or braces, and the like. The user database 68 may be stored locally within the processing and connectivity unit 54, or may be accessed remotely on another nearby device (e.g. smartphone) or via a cloud service - however, local storage may be preferable due to privacy/security concerns.

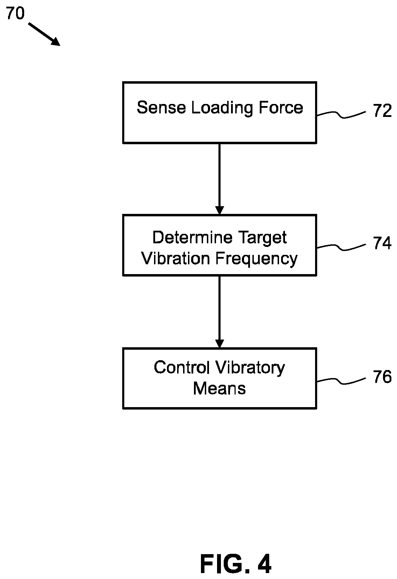

Referring now to Figure 4, there is depicted a simplified flow diagram of a method 70 for controlling a personal care device according to an embodiment of the invention. **In** this example, the personal care device is a mouthpiece for insertion into a user's oral cavity. The mouthpiece comprises a plurality of cleaning elements protruding from a support surface of the mouthpiece so that they engage with an oral surface of a user in use. The mouthpiece also comprise vibratory means (e.g. a motor with an offset cam) adapted to vibrate the cleaning elements at a range of different frequencies. The mouthpiece also comprises a pressure sensor adapted, in use, to sense/detect a loading force.

The method comprises the initial step of sensing 72, with the pressure sensor, a loading force applied to at least a first subset of the cleaning elements by engagement with the surface of the user.

The method then proceeds to step 74 of determining a target vibration frequency based on the sensed loading force applied to the at least first subset of the cleaning elements. Here, the step 74 comprises using one or more algorithms (like those described above) to determine a target vibration frequency to achieve a desired property of the cleaning elements (such as desired stiffness and/or movement direction).

Finally, in step 76, the vibratory means are controlled based on the target vibration frequency, e.g. a vibration frequency of the vibratory means is set to substantially equal to the target vibration frequency.

By way of further explanation and description of the proposed control method(s), an exemplary process for vibrational control of the mechanical properties and/or motion of cleaning elements of a personal care device will now be described below. The process is designed to enable a personal care device (such as a toothbrush, mouthpiece-style toothbrush or skin cleaning brush) to optimize the mechanical properties and/or motion of its cleaning elements (e.g. bristles, projections, nodules, protuberances, or the like) according to a current usage state.

(I) The user powers on the device and begins a cleaning/brushing session. The device checks via a sensor that cleaning elements are attached. If the cleaning elements have changed from the previous session (e.g. a brush head has been changed), the device acquires details of the cleaning elements and retrieves the physical properties from a database. Example of retrieved physical properties may include: overall length; arrangement of cleaning elements; length of cleaning elements; material of cleaning elements; presence of any vibration enhanced structures. If the cleaning elements have not changed (e.g. the same brush head from a previous session is still present), the device increase a usage count by one and retrieves the same properties as the previous session from the database. Where properties cannot be retrieved, the device may warn the user and/or request manual input. Newly acquired properties may be stored in a suitable area of the database.

(II) The user continues their cleaning/brushing session. The position of the device is tracked via a position/movement sensor and the tracked data is passed to the control unit, which runs or accesses a first algorithm to determine the In-Mouth position of the device (e.g. Mouth Mapping Algorithm of Figure 3). Here, the first algorithm uses known techniques, such as pedestrian dead reckoning, to calculate the In-Mouth Position. This may be enhanced by the use of calibration points at known positions.

Additionally, the first algorithm may use pressure data (measured simultaneously but described in the following step) to enhance accuracy. For example, the pressure force or direction applied by the user may form repeatable patterns in similar areas of the oral cavity over time. The first algorithm may use these points of known or expected pressure as (additional) calibration points of known position to enhance the location estimate.

The In-Mouth Position is passed to a second algorithm for calculating the ideal/desired cleaning element properties for a given usage state and In-Mouth Position (e.g. the Bristle Properties Algorithm of Figure 3).

(III) Simultaneously to (II) above, the loading force applied to the cleaning elements by the user is measured by the sensor. The sensed loading force data is passed to the control. Here, both the magnitude and direction of the force applied by the user to the cleaning elements is either measured or calculated. Depending on the available hardware, the pressure force may be: (a) measured directly (in this case, the device may require a sensor capable of resolving both force and direction); or (b) inferred (in this case, the force may be measured by uniaxial sensors and expected conformation relative to the teeth or gums may be used to resolve any directional ambiguity). This may not be required for device geometries which facilitate a direct pressure measurement e.g. mouthpiece-style toothbrushes.

The pressure magnitude and direction of the loading force applied to the cleaning elements is passed to a third algorithm for calculating the required frequency inputs to achieve desired cleaning element properties (e.g. the Bristle Actuation Algorithm of Figure 3).

(IV) The second algorithm uses the In-Mouth Position to calculate a set of desired cleaning element properties. The cleaning element properties may include: (a) global property changes such as increased vibration amplitude or increased stiffness; (b) local property changes such as increased or reduced effective stiffness, or preferred movement direction in a certain area/subset of the cleaning elements; (c) overall preferred motion direction of the cleaning elements.

The In-Mouth position is used to calculate the target/desired values for the cleaning element properties. This may also be augmented by any unique user data available from a user database for example.

For instance, where the In-Mouth Position indicates that a first subset of the cleaning elements is situated over the user's gum and a second subset of the cleaning elements is positioned over the user's the teeth, the first subset of cleaning elements position over the gum may be desired to be softened to avoid gum abrasion.

As a second example, where a user is fitted with braces and the In-Mouth Position indicates that the cleaning elements are close to the braces, the cleaning elements may be desired to exhibit a movement direction that acts to move the device away from the braces and/or to move debris away from the complex structure(s) of the braces, thus enhancing cleaning. This may employ unique user data relating to the presence and position of the braces, which may be retrieved from a user database for example.

The target/desired values for the cleaning element properties are passed to the third algorithm for calculating the required frequency inputs to achieve desired cleaning element properties (e.g. the Bristle Actuation Algorithm of Figure 3).

(V) The third algorithm examines the pressure magnitude and direction of the loading force (from step (III) above) to calculate any asymmetry present. According to asymmetry in the applied force, the obtained cleaning element properties, and the target/desired values for the cleaning element properties (from step (IV) above), the thirds algorithm calculates one or more target vibration frequency which are expected to achieve (or partly achieve) the desired properties.

Here, force asymmetry may be used to signify different levels of force applied to different cleaning elements of the device, dependent on their position in/on the device. Where no suitable pressure asymmetry is detected the system may: Wait until suitable asymmetry is detected; guide or warn the user to achieve asymmetric force; apply a non-spatially resolved input to the cleaning elements as a whole (e.g. a global stiffening or softening input); actuate other vibration-responsive structures included in/on the device.

The third algorithm calculates the expected frequency response of the cleaning elements given the measured force as a function of their position in/on the device. The calculation is based on treating the force as a damping force applied to a system undergoing forced vibrations, and may proceed via analytical calculation, or empirically.

By way of example, the following analytical calculation may be employed:

The third algorithm calculates the damped natural frequency $\omega_d$ for cleaning elements at different areas of the device, given the known un-damped natural fequency $\omega$ (from a database), using the following equation (i):

$$\omega_d = \omega \sqrt{1 - 2\zeta^2}, \qquad\qquad (i)$$

where the damping ratio $\zeta = c/c_d$ is calculated by comparing the damping c provided by the measured pressure at that cleaning element location with the pressure required to achieve critical damping $c_d$ (taken from a database). By applying frequencies close to the damped natural frequency $\omega_d$, the cleaning elements may be expected to undergo their maximum amplitude displacement.

The analytical calculation detailed in the preceding paragraphs above may fail where there are significant non-ideal properties of the system (such as poor transmission of vibrations through attachment of the cleaning elements to the support surface, or significant manufacturing variations which affect the natural frequency of the cleaning elements). **In** this case, an empirical method may be used, in which the average response for a given cleaning element collection (e.g. brush head type) to a given combination of applied force magnitude and direction and input frequency is measured by experiment and stored and accessed via a database. The third algorithm may then simply compare the force applied to the cleaning elements at each moment with the empirical results and determined target vibration frequencies accordingly.

The calculations may be repeated for several areas (i.e. subsets) of cleaning elements across the device to calculate the frequency response as a function of position in/on the device. Based on spatially-resolved response data, the third algorithm then calculates the required target vibration frequencies to achieve the desired cleaning element properties.

Where the cleaning element properties require a stiffening of some or all of the device, this may be achieved by applying the vibration frequency which result in a maximum amplitude vibration. Conversely, a softening of some cleaning elements may be achieved by stiffening cleaning element in other parts of the device (which will tend to reduce the component of the user-applied force which is transmitted through the off-resonance cleaning elements).

Where motion in a certain direction is required, the target vibration frequency(ies) may be chosen, using the analytically- or empirically-derived asymmetry in cleaning element vibration properties from the third algorithm in place of the designed-in asymmetry arising from cleaning elements of different thicknesses.

Where the target vibration frequency(ies) calculated by the third algorithm are not practical to apply (for example, because they lie outside the achievable range of the vibration means, or might be detrimental to cleaning efficacy or other tasks of the device), the expected cleaning element properties associated with the closest achievable frequencies may be calculated and applied instead. The achievable cleaning element properties may be checked with the second algorithm to ensure they remain desirable.

(VI) The motor is control to apply the target vibration frequency(ies) to the cleaning elements. The target vibration frequency input may be delivered as a modification to the normal brushing motion, or (preferably) as an additional, secondary input.

(VII) The steps above are repeated as the user completes their brushing session, given the changing inputs of applied force and position to calculate updated desired cleaning elements properties and hence updated target vibration frequencies.

It is to be understood that many addition embodiments of the proposed concept(s) are foresee, e.g. through modification of the above-described embodiments.

By way of example, modifications to incorporate the use of vibration enhanced structures may be employed. Such modifications are intended to enable the use of vibration enhanced structures. These structures may have an enhanced or known vibration response and be positioned at predetermined locations in/on a vibratory personal care device. Such structures may be especially relevant for performing specialized dental tasks such as tongue cleaning or interdental brushing for example. For instance, the above described method(s) may be combined with the following modification to enable the use of vibration enhanced structures.

In particular, the method proceeds substantially the same as the method described above, with the following modifications:

In Step (I), the location, properties and intended use of the vibration enhanced structures are retrieved from a database.

In Step (II), the first algorithm cross-references the In-Mouth Position with the position and usage of the vibration enhanced structures, and sets a flag when there is agreement. For example, where the device contains vibration enhanced structures intended for interdental cleaning, the first algorithm may set a logical flag to 'true' when their location is expected to overlap with the user's interdental spaces. Where the flag is set to true, the second algorithm may choose to actuate the vibration enhanced structures rather than optimize the properties of the remaining cleaning elements. If this is the case, the third algorithm may simply retrieve the relevant driving frequencies for the vibration enhanced structures from a database. The frequencies may further be modified according to user-applied force in the same way as for ordinary cleaning element.

In some instances, the user may deliberately enter a mode where only the vibration enhanced structures are in use (e.g., where the back of the device includes such structures for enhanced/alternative cleaning). In this case, the user may be guided to achieve the correct relative In-Mouth Position (i.e., such that the flag of step (II) remains set to 'true'). The vibration means may then be controlled to apply the relevant target vibration frequencies so long as the vibration enhanced structures are in their intended location (or until deactivated by the user).

By way of yet further example, modifications specific to the use of mouthpiece-style toothbrushes may be employed. For instance, the above described method(s) may be combined with the following modification to enable the use of mouthpiece style toothbrushes.

In particular, the method proceeds substantially the same as the method described above, with the following modifications: In step (II), the first algorithm calculates the fit of the mouthpiece-style toothbrush to the user's mouth (rather than just the position of the device in the mouth). The fit may include parameters such as the distance from any group of cleaning element to the teeth, and the alignment between the groups of cleaning elements and the user's teeth, gums, and interdental spaces.

The fit is expected to remain substantially the same throughout the brushing session, since the user does not generally move such a device around the mouth. However, any changes may be monitored by the position sensor.

In Step (III), the pressure measurement is modified. The pressure may be applied by a spring or clamping force from the mouthpiece-style toothbrush itself; in this case it is likely to be directly measured by hardware local to that spring (i.e. by a clamp sensor). Where the pressure is applied by the user (e.g. by "biting" on the mouthpiece-style toothbrush) the pressure may be measured by one or more additional pressure sensors mounted within the mouthpiece-style toothbrush. In this case, the pressure measurement may be enhanced by comparing the user's unique dental anatomy to the physical design of the mouthpiece to identify any expected 'hot spots" in pressure (e.g. due to teeth situated at a greater angle towards the cleaning elements of the mouthpiece toothbrush which may cause locally increase pressure on the cleaning elements).

In Steps (IV) and (V), the second and third algorithms may calculate desired cleaning element properties and associated target vibration frequencies for different parts of the mouthpiece-style toothbrush sequentially, rather than calculating for the mouthpiece as a whole. This may allow finer control of various groups of cleaning elements within the mouthpiece, which are expected to be mounted at different angles and locations relative to the teeth, and therefore experience different levels of pressure (and have different ideal properties). By calculating separate desired cleaning element properties and target vibration frequencies for the different cleaning element groups, such embodiments may apply locally-optimal input vibration frequencies while only needing simple vibration means (e.g. a single motor).

From the above description of various concepts and embodiments, it will be appreciated that there is proposed a method of controlling a personal care device, wherein the personal care device comprises: a plurality of cleaning elements for engagement with a surface of a user; vibratory means adapted to vibrate the cleaning elements at a range of different frequencies; and a pressure sensor. The method comprises: sensing, with the pressure sensor, a loading force applied to at least a first subset of the cleaning elements by engagement with the surface of the user; determining a target vibration frequency based on the sensed loading force applied to the at least first subset of the cleaning elements; and controlling the vibratory means based on the target vibration frequency. Such a method may be employed in a processing system or computer, and such a system/computer may be integrated with a vibratory personal care device.

Figure 6 illustrates an example of a computer 80 within which one or more parts of an embodiment may be employed. Various operations discussed above may utilize the capabilities of the computer 80. For example, one or more parts of a system for controlling a personal care device may be incorporated in any element, module, application, and/or component discussed herein. In this regard, it is to be understood that system functional blocks can run on a single computer or may be distributed over several computers and locations (e.g. connected via internet), such as a cloud-based computing infrastructure.

The computer 80 includes, but is not limited to, PCs, workstations, laptops, PDAs, palm devices, servers, storages, and the like. Generally, in terms of hardware architecture, the computer 80 may include one or more processors 81, memory 82, and one or more I/O devices 83 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 81 is a hardware device for executing software that can be stored in the memory 82. The processor 81 can be virtually any custom made or commercially available processor, a central processing unit (CPU), a digital signal processor (DSP), or an auxiliary processor among several processors associated with the computer 80, and the processor 81 may be a semiconductor based microprocessor (in the form of a microchip) or a microprocessor.

The memory 82 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 82 may incorporate electronic, magnetic, optical, and/or other types of storage media. Note that the memory 82 can have a distributed architecture, where various components are situated remote from one another, but can be accessed by the processor 81.

The software in the memory 82 may include one or more separate programs, each of which comprises an ordered listing of executable instructions for implementing logical functions. The software in the memory 82 includes a suitable operating system (O/S) 84, compiler 86, source code 85, and one or more applications 87 in accordance with exemplary embodiments. As illustrated, the application 87 comprises numerous functional components for implementing the features and operations of the exemplary embodiments. The application 87 of the computer 80 may represent various applications, computational units, logic, functional units, processes, operations, virtual entities, and/or modules in accordance with exemplary embodiments, but the application 87 is not meant to be a limitation.

The operating system 84 controls the execution of other computer programs, and provides scheduling, input-output control, file and data management, memory management, and communication control and related services. It is contemplated by the inventors that the application 87 for implementing exemplary embodiments may be applicable on all commercially available operating systems.

Application 87 may be a source program, executable program (object code), script, or any other entity comprising a set of instructions to be performed. When a source program, then the program is usually translated via a compiler (such as the compiler 86), assembler, interpreter, or the like, which may or may not be included within the memory 82, so as to operate properly in connection with the O/S 84. Furthermore, the application 87 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, NET, and the like.

The I/O devices 83 may include input devices such as, for example but not limited to, a mouse, keyboard, scanner, microphone, camera, etc. Furthermore, the I/O devices 83 may also include output devices, for example but not limited to a printer, display, etc. Finally, the I/O devices 83 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 83 also include components for communicating over various networks, such as the Internet or intranet.

If the computer 80 is a PC, workstation, intelligent device or the like, the software in the memory 82 may further include a basic input output system (BIOS) (omitted for simplicity). The BIOS is a set of essential software routines that initialize and test hardware at startup, start the O/S 84, and support the transfer of data among the hardware devices. The BIOS is stored in some type of read-only-memory, such as ROM, PROM, EPROM, EEPROM or the like, so that the BIOS can be executed when the computer 80 is activated.

When the computer 80 is in operation, the processor 81 is configured to execute software stored within the memory 82, to communicate data to and from the memory 82, and to generally control operations of the computer 80 pursuant to the software. The application 87 and the O/S 84 are read, in whole or in part, by the processor 81, perhaps buffered within the processor 81, and then executed.

When the application 87 is implemented in software it should be noted that the application 87 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 87 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The proposed control method(s), may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out a control method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figs. 1, 2 and 3 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

**Claims**

1.  A personal care device comprising:

    a plurality of cleaning elements (14) for engagement with a surface of a user;
    vibratory means (12) adapted to vibrate the cleaning elements at a range of different frequencies;
    a pressure sensor (16) configured to sense a loading force applied to at least a first subset of the cleaning elements by engagement with the surface of the user; and
    a control unit (18); and
    **characterized in that** the control unit (18) is configured to:

    determine a target vibration frequency based on the sensed loading force applied to the at least first subset of the cleaning elements, and cleaning element data describing one or more physical properties of the cleaning elements, wherein the target vibration frequency is configured to cause at least one of a mechanical response of the cleaning elements or a movement direction of the cleaning elements; and
    control the vibratory means based on the target vibration frequency.

2.  The personal care device of claim 1, further comprising:

    a position sensor (52) for sensing a positioning of at least a subset of the plurality of cleaning elements,
    and wherein the control unit (18) is configured to determine the target vibration frequency further based on the sensed position of the at least first subset of the cleaning elements.

3.  The personal care device of claim 2, wherein the control unit (18) is configured to determine a target direction based on the sensed position of the at least first subset of the cleaning elements (14) and to determine the target vibration frequency based on the determined target direction.

4.  The personal care device of claim 2 or 3, wherein the control unit (18) is further configured, in use, to identify a surface of the user engaged by the plurality of cleaning elements based on the sensed position of the at least first subset of the cleaning elements, and to determine the target vibration frequency further based on the identified surface of the user.

5. The personal care device of any of claims 1 to 4, wherein the control unit (18) comprises a communication interface (22) configured to obtain the cleaning element data of the cleaning elements (14).

6. The personal care device of claim 5, wherein the communication interface (22) is configured to obtain cleaning element data from a database (66) of cleaning element data, and optionally wherein the database implemented, at least in part, in a remotely accessible data storage unit.

7. The personal care device of any of claims 1 to 6, wherein the one or more physical properties of the cleaning elements comprises at least one of: shape; type; size; cross-sectional area; arrangement; material; stiffness; length; number of bristles per unit area; and mounting angle.

8. The personal care device of any of claims 1 to 7, wherein the control unit (18) is further configured to determine a second target vibration frequency based on the sensed loading force applied to the at least first subset of the cleaning elements (14) and to control the vibratory means based on the second target vibration frequency.

9. The personal care device of any of claims 1 to 8, wherein the pressure sensor (16) is further configured to sense a loading force applied to a second, different subset of the cleaning elements (14) by engagement with the surface of the user,
and wherein the control unit (18) is further configured to determine a third target vibration frequency based on the sensed loading force applied to the second subset of the cleaning elements and to control the vibratory means based on the third target vibration frequency.

10. The personal care device of any of claims 1 to 9, wherein the sensed loading force comprises at least one of a magnitude value and direction value, and wherein the control unit (18) is configured determine the target vibration frequency based on the at least one of a magnitude value and direction value.

11. The personal care device of any of claims 1 to 10, wherein the at least first subset of the plurality of cleaning elements (14) comprises vibration enhanced structures configured to have a predetermined mechanical property in response to being vibrated at a predetermined excitation frequency.

12. The personal care device of claim 11, wherein the vibration enhanced structures comprise at least one of:

an elongated bristle having a cross-sectional shape and/or size that is different at at least two different positions along the longitudinal length of the bristle;
an elongated structure mounted to the personal care device with an angular bias; and
an elongated bristle formed of differing materials at at least two different positions along the longitudinal length of the bristle.

13. The personal care device of any of claims 1 to 12, wherein the personal care device comprises a toothbrush, a mouthpiece, or a skin cleansing brush.

14. A non-therapeutic method of controlling a personal care device, wherein the personal care device comprises: a plurality of cleaning elements for engagement with a surface of a user; vibratory means adapted to vibrate the cleaning elements at a range of different frequencies; and a pressure sensor, and wherein the method comprises:

sensing (72), with the pressure sensor, a loading force applied to at least a first subset of the cleaning elements by engagement with the surface of the user;
determining (74) a target vibration frequency based on the sensed loading force applied to the at least first subset of the cleaning elements and cleaning element data describing one or more physical properties of the cleaning elements, wherein the target vibration frequency is configured to cause at least one of a mechanical response of the cleaning elements or a movement direction of the cleaning elements; and
controlling (76) the vibratory means based on the target vibration frequency.

15. A computer program comprising computer program code means which is adapted, when said computer program is run on a computer, to implement the method claim 14.

**Patentansprüche**

1. Körperpflegevorrichtung, umfassend:

   eine Vielzahl von Reinigungselementen (14) zum Eingriff mit einer Oberfläche eines Benutzers;
   Vibrationsmittel (12), die dazu angepasst sind, die Reinigungselemente in einem Bereich unterschiedlicher Frequenzen vibrieren zu lassen;
   einen Drucksensor (16), der dazu konfiguriert ist, eine Belastungskraft zu erfassen, die auf mindestens einen ersten Teilsatz der Reinigungselemente durch Eingriff mit der Oberfläche des Benutzers ausgeübt wird; und
   eine Steuerungseinheit (18); und
   **dadurch gekennzeichnet, dass** die Steuerungseinheit (18) für Folgendes konfiguriert ist:

   Bestimmen einer Zielvibrationsfrequenz basierend auf der erfassten Belastungskraft, die auf den mindestens ersten Teilsatz der Reinigungselemente ausgeübt wird, und Reinigungselementdaten, die eine oder mehrere physikalische Eigenschaften der Reinigungselemente beschreiben, wobei die Zielvibrationsfrequenz dazu konfiguriert ist, mindestens eine mechanische Reaktion der Reinigungselemente oder eine Bewegungsrichtung der Reinigungselemente zu veranlassen; und
   Steuern der Vibrationsmittel basierend auf der Zielvibrationsfrequenz.

2. Körperpflegevorrichtung nach Anspruch 1, weiter umfassend:

   einen Positionssensor (52) zum Erfassen einer Positionierung von mindestens einem Teilsatz der Vielzahl von Reinigungselementen,
   und wobei die Steuerungseinheit (18) dazu konfiguriert ist, die Zielvibrationsfrequenz weiter basierend auf der erfassten Position des mindestens ersten Teilsatzes der Reinigungselemente zu bestimmen.

3. Körperpflegevorrichtung nach Anspruch 2, wobei die Steuerungseinheit (18) dazu konfiguriert ist, eine Zielrichtung basierend auf der erfassten Position des mindestens ersten Teilsatzes der Reinigungselemente (14) zu bestimmen und die Zielvibrationsfrequenz basierend auf der bestimmten Zielrichtung zu bestimmen.

4. Körperpflegevorrichtung nach Anspruch 2 oder 3, wobei die Steuerungseinheit (18) weiter dazu konfiguriert ist, in Verwendung eine Oberfläche des Benutzers zu identifizieren, die von der Vielzahl von Reinigungselementen in Eingriff genommen wird, basierend auf der erfassten Position des mindestens ersten Teilsatzes der Reinigungselemente, und die Zielvibrationsfrequenz weiter basierend auf der identifizierten Oberfläche des Benutzers zu bestimmen.

5. Körperpflegevorrichtung nach einem der Ansprüche 1 bis 4, wobei die Steuerungseinheit (18) eine Kommunikationsschnittstelle (22) umfasst, die dazu konfiguriert ist, die Reinigungselementdaten der Reinigungselemente (14) zu erhalten.

6. Körperpflegevorrichtung nach Anspruch 5, wobei die Kommunikationsschnittstelle (22) dazu konfiguriert ist, Reinigungselementdaten aus einer Datenbank (66) von Reinigungselementdaten zu erhalten, und wobei die Datenbank optional mindestens teilweise in einer Datenspeichereinheit implementiert ist, auf die aus der Ferne zugegriffen werden kann.

7. Körperpflegevorrichtung nach einem der Ansprüche 1 bis 6, wobei die eine oder mehreren physikalischen Eigenschaften der Reinigungselemente mindestens eines des Folgenden umfassen: Form; Typ; Größe; Querschnittsfläche; Anordnung; Material; Steifheit; Länge; Anzahl von Borsten pro Flächeneinheit; und Montagewinkel.

8. Körperpflegevorrichtung nach einem der Ansprüche 1 bis 7, wobei die Steuerungseinheit (18) weiter dazu konfiguriert ist, eine zweite Zielvibrationsfrequenz basierend auf der erfassten Belastungskraft zu bestimmen, die auf den mindestens ersten Teilsatz der Reinigungselemente (14) ausgeübt wird, und die Vibrationsmittel basierend auf der zweiten Zielvibrationsfrequenz zu steuern.

9. Körperpflegevorrichtung nach einem der Ansprüche 1 bis 8, wobei der Drucksensor (16) weiter dazu konfiguriert ist, eine Belastungskraft zu erfassen, die auf einen zweiten, anderen Teilsatz der Reinigungselemente (14) durch Eingriff mit der Oberfläche des Benutzers ausgeübt wird,
und wobei die Steuerungseinheit (18) weiter dazu konfiguriert ist, eine dritte Zielvibrationsfrequenz basierend auf der erfassten Belastungskraft zu bestimmen, die auf den zweiten Teilsatz der Reinigungselemente ausgeübt wird, und die Vibrationsmittel basierend auf der dritten Zielvibrationsfrequenz zu steuern.

10. Körperpflegevorrichtung nach einem der Ansprüche 1 bis 9, wobei die erfasste Belastungskraft mindestens einen von einem Größenwert und einem Richtungswert umfasst, und wobei die Steuerungseinheit (18) dazu konfiguriert ist, die Zielvibrationsfrequenz basierend auf dem mindestens einen von einem Größenwert und einem Richtungswert zu bestimmen.

11. Körperpflegevorrichtung nach einem der Ansprüche 1 bis 10, wobei der mindestens erste Teilsatz der Vielzahl von Reinigungselementen (14) vibrationsverstärkte Strukturen umfasst, die dazu konfiguriert sind, infolgedessen, dass sie mit einer vorbestimmten Anregungsfrequenz vibriert werden, eine vorgegebene mechanische Eigenschaft aufzuweisen.

12. Körperpflegevorrichtung nach Anspruch 11, wobei die vibrationsverstärkten Strukturen mindestens eines des Folgenden umfassen:

eine längliche Borste, die eine Querschnittsform und/oder Größe aufweist, die an mindestens zwei verschiedenen Positionen entlang der Längslänge der Borste unterschiedlich ist;
eine längliche Struktur, die mit einer Winkelausrichtung an der Körperpflegevorrichtung angebracht ist; und
eine längliche Borste, die an mindestens zwei verschiedenen Positionen entlang der Längslänge der Borste aus unterschiedlichen Materialien gebildet ist.

13. Körperpflegevorrichtung nach einem der Ansprüche 1 bis 12, wobei die Körperpflegevorrichtung eine Zahnbürste, ein Mundstück oder eine Hautreinigungsbürste umfasst.

14. Nicht-therapeutisches Verfahren zum Steuern einer Körperpflegevorrichtung, wobei die Körperpflegevorrichtung Folgendes umfasst: eine Vielzahl von Reinigungselementen zum Eingriff mit einer Oberfläche eines Benutzers; Vibrationsmittel, die dazu angepasst sind, die Reinigungselemente mit einem Bereich verschiedener Frequenzen vibrieren zu lassen; und einen Drucksensor, und wobei das Verfahren Folgendes umfasst:

Erfassen (72), mit dem Drucksensor, einer Belastungskraft, die durch Eingriff mit der Oberfläche des Benutzers auf mindestens einen ersten Teilsatz der Reinigungselemente ausgeübt wird;
Bestimmen (74) einer Zielvibrationsfrequenz basierend auf der erfassten Belastungskraft, die auf den mindestens ersten Teilsatz der Reinigungselemente ausgeübt wird, und Reinigungselementdaten, die eine oder mehrere physikalische Eigenschaften der Reinigungselemente beschreiben, wobei die Zielvibrationsfrequenz dazu konfiguriert ist, mindestens eine mechanische Reaktion der Reinigungselemente oder eine Bewegungsrichtung der Reinigungselemente zu veranlassen; und
Steuern (76) der Vibrationsmittel basierend auf der Zielvibrationsfrequenz.

15. Computerprogramm, das Computerprogrammcodemittel umfasst, das dazu angepasst ist, wenn das Computerprogramm auf einem Computer läuft, das Verfahren nach Anspruch 14 zu implementieren.

**Revendications**

1. Dispositif de soins personnels comprenant :

une pluralité d'éléments de nettoyage (14) destinés à une mise en prise avec une surface d'un utilisateur ;
des moyens vibratoires (12) adaptés pour faire vibrer les éléments de nettoyage à une gamme de fréquences différentes ;
un capteur de pression (16) configuré pour détecter une force de charge appliquée à au moins un premier sous-ensemble des éléments de nettoyage par mise en prise avec la surface de l'utilisateur ; et
une unité de commande (18) ; et
**caractérisé en ce que** l'unité de commande (18) est configurée pour :

déterminer une fréquence de vibration cible sur la base de la force de charge détectée appliquée à l'au moins un premier sous-ensemble des éléments de nettoyage et des données d'éléments de nettoyage décrivant une ou plusieurs propriétés physiques des éléments de nettoyage, dans lequel la fréquence de vibration cible est configurée pour provoquer au moins une parmi une réponse mécanique des éléments de nettoyage ou une direction de mouvement des éléments de nettoyage ; et
commander les moyens vibratoires sur la base de la fréquence de vibration cible.

2. Dispositif de soins personnels selon la revendication 1, comprenant en outre :

un capteur de position (52) destiné à détecter un positionnement d'au moins un sous-ensemble de la pluralité d'éléments de nettoyage,
et dans lequel l'unité de commande (18) est configurée pour déterminer la fréquence de vibration cible en outre sur la base de la position détectée de l'au moins un premier sous-ensemble des éléments de nettoyage.

3. Dispositif de soins personnels selon la revendication 2, dans lequel l'unité de commande (18) est configurée pour déterminer une direction cible sur la base de la position détectée de l'au moins un premier sous-ensemble des éléments de nettoyage (14) et pour déterminer la fréquence de vibration cible sur la base de la direction cible déterminée.

4. Dispositif de soins personnels selon la revendication 2 ou 3, dans lequel l'unité de commande (18) est en outre configurée, lors de l'utilisation, pour identifier une surface de l'utilisateur mise en prise par la pluralité d'éléments de nettoyage sur la base de la position détectée de l'au moins un premier sous-ensemble des éléments de nettoyage et pour déterminer la fréquence de vibration cible en outre sur la base de la surface identifiée de l'utilisateur.

5. Dispositif de soins personnels selon l'une quelconque des revendications 1 à 4, dans lequel l'unité de commande (18) comprend une interface de communication (22) configurée pour obtenir les données d'éléments de nettoyage des éléments de nettoyage (14).

6. Dispositif de soins personnels selon la revendication 5, dans lequel l'interface de communication (22) est configurée pour obtenir des données d'éléments de nettoyage à partir d'une base de données (66) de données d'éléments de nettoyage et facultativement dans lequel la base de données est mise en œuvre, au moins en partie, dans une unité de stockage de données accessible à distance.

7. Dispositif de soins personnels selon l'une quelconque des revendications 1 à 6, dans lequel les une ou plusieurs propriétés physiques des éléments de nettoyage comprennent au moins l'un parmi : la forme ; le type ; la taille ; la section transversale ; l'agencement ; le matériau ; la rigidité ; la longueur ; le nombre de poils par unité de surface ; et l'angle de montage.

8. Dispositif de soins personnels selon l'une quelconque des revendications 1 à 7, dans lequel l'unité de commande (18) est en outre configurée pour déterminer une deuxième fréquence de vibration cible sur la base de la force de charge détectée appliquée à l'au moins premier sous-ensemble des éléments de nettoyage (14) et pour commander les moyens vibratoires sur la base de la deuxième fréquence de vibration cible.

9. Dispositif de soins personnels selon l'une quelconque des revendications 1 à 8, dans lequel le capteur de pression (16) est en outre configuré pour détecter une force de charge appliquée à un second sous-ensemble différent des éléments de nettoyage (14) par mise en prise avec la surface de l'utilisateur,
et dans lequel l'unité de commande (18) est en outre configurée pour déterminer une troisième fréquence de vibration cible sur la base de la force de charge détectée appliquée au second sous-ensemble des éléments de nettoyage et pour commander les moyens vibratoires sur la base de la troisième fréquence de vibration cible.

10. Dispositif de soins personnels selon l'une quelconque des revendications 1 à 9, dans lequel la force de charge détectée comprend au moins l'une parmi une valeur d'amplitude et une valeur de direction, et dans lequel l'unité de commande (18) est configurée pour déterminer la fréquence de vibration cible sur la base de l'au moins une parmi une valeur d'amplitude et une valeur de direction.

11. Dispositif de soins personnels selon l'une quelconque des revendications 1 à 10, dans lequel l'au moins premier sous-ensemble de la pluralité d'éléments de nettoyage (14) comprend des structures améliorées par vibration configurées pour présenter une propriété mécanique prédéterminée en réponse à une vibration à une fréquence d'excitation prédéterminée.

12. Dispositif de soins personnels selon la revendication 11, dans lequel les structures améliorées par vibration comprennent au moins l'un parmi :

un poil allongé présentant une forme transversale et/ou une taille différentes dans au moins deux positions différentes sur la longueur longitudinale du poil ;
une structure allongée montée sur le dispositif de soins personnels avec une polarisation angulaire ; et
un poil allongé formé de matériaux différents dans au moins deux positions différentes le long de la longueur longitudinale du poil.

13. Dispositif de soins personnels selon l'une quelconque des revendications 1 à 12, dans lequel le dispositif de soins personnels comprend une brosse à dents, un embout buccal ou une brosse de nettoyage de la peau.

14. Procédé non thérapeutique de commande d'un dispositif de soins personnels, dans lequel le dispositif de soins personnels comprend : une pluralité d'éléments de nettoyage destinés à être mis en prise avec une surface d'un utilisateur ; des moyens vibratoires adaptés pour faire vibrer les éléments de nettoyage à une plage de fréquences différentes ; et un capteur de pression, et dans lequel le procédé comprend :

la détection (72), avec le capteur de pression, d'une force de charge appliquée à au moins un premier sous-ensemble des éléments de nettoyage par mise en prise avec la surface de l'utilisateur ;
la détermination (74) d'une fréquence de vibration cible sur la base de la force de charge détectée appliquée à l'au moins premier sous-ensemble des éléments de nettoyage et des données d'éléments de nettoyage décrivant une ou plusieurs propriétés physiques des éléments de nettoyage, dans lequel la fréquence de vibration cible est configurée pour provoquer au moins une parmi une réponse mécanique des éléments de nettoyage ou une direction de mouvement des éléments de nettoyage ; et
la commande (76) des moyens vibratoires sur la base de la fréquence de vibration cible.

15. Programme informatique comprenant un moyen de code de programme informatique qui est adapté, lorsque ledit programme informatique est exécuté sur un ordinateur, pour mettre en œuvre le procédé selon la revendication 14.

**FIG. 1**

**FIG. 2**

**FIG. 3**

70

```
┌─────────────────────────┐
│   Sense Loading Force    │──⌒── 72
└─────────────────────────┘
             │
             ▼
┌─────────────────────────┐
│    Determine Target      │──⌒── 74
│   Vibration Frequency    │
└─────────────────────────┘
             │
             ▼
┌─────────────────────────┐
│    Control Vibratory     │──⌒── 76
│        Means             │
└─────────────────────────┘
```

# FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021186196 A1
- US 2021393026 A1
- US 2017332850 A1
- US 2011010875 A1